# EUROPÄISCHE PATENTSCHRIFT

(11) **EP 2 410 310 B1**
(45) Veröffentlichungstag und Bekanntmachung des Hinweises auf die Patenterteilung: **26.06.2013**
(21) Anmeldenummer: 11171847.4
(22) Anmeldetag: 29.06.2011
(51) Int. Cl.: F16H 59/68, G01M 13/02

(54) **Verfahren und Vorrichtung zum Betreiben einer mit einem Getriebe gekoppelten elektrischen Maschine**
Method and device for operating an electric machine coupled with a drive
Procédé et dispositif de fonctionnement d'une machine électrique couplée à un engrenage

(30) Priorität: 21.07.2010 DE 102010031815
(43) Veröffentlichungstag der Anmeldung: 25.01.2012
(73) Patentinhaber: GE Energy Power Conversion GmbH, 12277 Berlin (DE)
(72) Erfinder: Boni, Marco, 10627 Berlin (DE); Neuber, Frank, 16321 Bernau OT Schönow (DE); Weitendorf, Niels, 14482 Potsdam (DE)
(74) Vertreter: Dreiss

(56) Entgegenhaltungen:
- WO-A2-2009/024305
- DE-A1-102007 016 420

## Beschreibung

Die Erfindung betrifft ein Verfahren und eine Vorrichtung zum Betreiben einer mit einem Getriebe gekoppelten elektrischen Maschine.

Beispielsweise bei einem Getriebeprüfstand ist ein mechanisches Getriebe mit einer elektrischen Maschine drehfest gekoppelt. Zum Testen des Getriebes wird die Maschine motorisch und generatorisch betrieben. Dies bedeutet, dass im zeitlichen Verlauf auch Lastwechsel in dem Getriebe auftreten. Aufgrund eines herstellungsbedingten Spiels des Getriebes ist es möglich, dass bei einem derartigen Lastwechsel ein sogenannter Losezustand entsteht. Dies bedeutet, dass kein Kraftschluss mehr zwischen der Eingangswelle und der Ausgangswelle des Getriebes vorhanden ist. Während des zu dem Losezustand zugehörigen Loseintervalls verdrehen sich die Eingangswelle und die Ausgangswelle des Getriebes um einen Verdrehwinkel zueinander. Dieser Verdrehwinkel kann in Abhängigkeit von der Übersetzung des Getriebes recht große Werte annehmen, gegebenenfalls bis zu 30 Grad und mehr. Insbesondere im zeitlichen Verlauf am Ende des Loseintervalls kann es dabei zu unerwünschten stoßartigen Übergängen oder sonstigen Drehmomentüberschwingern kommen.

Aus der DE 10 2007 016 420 A1 ist ein Prüfstand für den Antriebsstrang eines Kraftfahrzeugs bekannt.

Aufgabe der Erfindung ist es, ein Verfahren und eine Vorrichtung zu schaffen, die einen verbesserten Durchlauf durch einen Losezustand eines Getriebes ermöglichen.

Diese Aufgabe wird durch ein Verfahren nach dem Anspruch 1 und eine Vorrichtung nach dem Anspruch 7 gelöst.

Erfindungsgemäß wird in Abhängigkeit von der Drehzahl der Eingangswelle und der Drehzahl der Ausgangswelle des Getriebes ein Losezustand des Getriebes ermittelt, in dem im Wesentlichen kein Kraftschluss zwischen der Eingangswelle und der Ausgangswelle vorhanden ist. Während dieses Losezustands wird die elektrische Maschine unterschiedlich beeinflusst. Dies bringt den Vorteil mit sich, dass durch die unterschiedliche Beeinflussung unerwünschte stoßartige Übergänge oder sonstige Drehmomentüberschwinger während des Losezustands im Wesentlichen kompensiert und damit weitgehend unterbunden werden können. Gleichzeitig kann erreicht werden, dass der Losezustand möglichst schnell durchlaufen wird.

Bei der Erfindung wird der Losezustand in zwei Winkelbereiche aufgeteilt, in denen die elektrische Maschine unterschiedlich beeinflusst wird. Damit kann erreicht werden, dass der Losezustand insbesondere am Anfang möglichst schnell durchlaufen wird, während die am Ende des Loszustands vorhandenen Stöße trotzdem möglichst weitreichend unterbunden werden. Besonders vorteilhaft ist es, wenn in einem ersten Winkelbereich am Anfang des Losezustands eine eher schwache Dämpfung erzeugt wird, und/oder wenn in einem zweiten Winkelbereich nach dem ersten Winkelbereich eine eher starke Dämpfung erzeugt wird. Damit ist es insbesondere möglich, stoßartige Übergänge am Ende des Losezustands gesondert zu kompensieren und gleichzeitig ein schnelles Durchlaufen des Losezustands zu gewährleisten.

Bei einer vorteilhaften Ausgestaltung der Erfindung wird aus der Drehzahl der Eingangswelle und der Drehzahl der Ausgangswelle des Getriebes eine Drehzahldifferenz gebildet, wobei die elektrische Maschine vorzugsweise derart beeinflusst wird, dass die Drehzahldifferenz im ersten Winkelbereich eher schwach und im zweiten Winkelbereich eher stark gedämpft wird.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind.

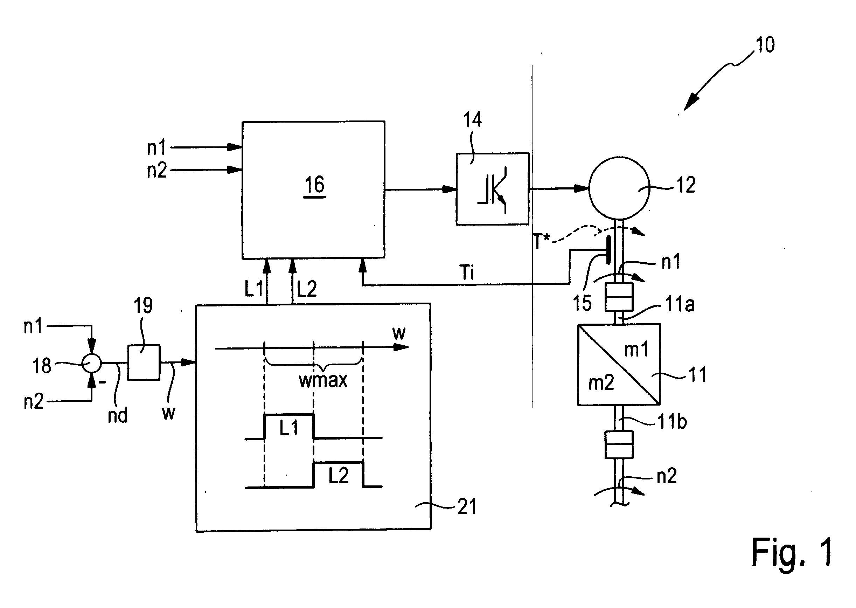

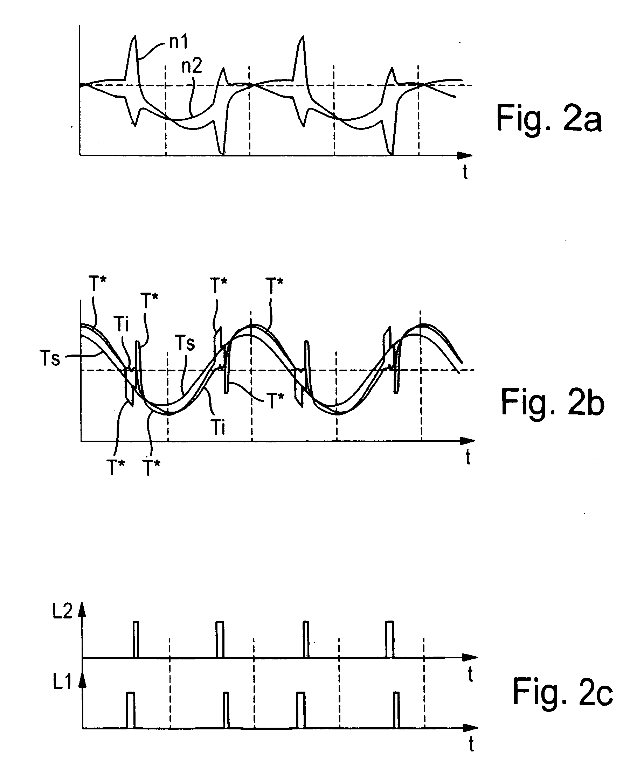

Die Figur 1 zeigt ein schematisches Blockschaltbild eines Ausführungsbeispiels eines erfindungsgemäßen Verfahrens zum Betreiben einer mit einem Getriebe gekoppelten elektrischen Maschine, und die Figuren 2a, 2b, 2c zeigen schematische Zeitdiagramme von Betriebsgrößen der Maschine und des Getriebes der Figur 1.

In der Figur 1 ist ein Teil eines Getriebeprüfstands 10 gezeigt, bei dem ein mechanisches Getriebe 11 drehfest mit einer elektrischen Maschine 12 gekoppelt ist. Die Maschine 12 kann mit einer veränderlichen Drehzahl n1 betrieben werden, so dass auch die mit der Maschine 12 gekoppelte Eingangswelle 11a des Getriebes 11 diese Drehzahl n1 aufweist. Das Getriebe 11 hat eine vorgegebene Übersetzung ml/m2, so dass die Ausgangswelle 11b des Getriebes 11 eine Drehzahl n2 aufweist. Die Drehzahlen n1, n2 werden in nicht-dargestellter Weise gemessen oder auf sonstige Weise ermittelt.

Die Maschine 12 ist mit einer Ansteuerelektronik 14 elektrisch verbunden. Die Ansteuerelektronik 14 weist steuerbare Leistungshalbleiterbauelemente auf und ist dazu geeignet, einerseits die Maschine 12 motorisch anzutreiben sowie andererseits einen generatorischen Betrieb der Maschine 12 zu realisieren. Mit Hilfe der Ansteuerelektronik 14 kann die Drehzahl der elektrischen Maschine 12 beeinflusst werden.

Der Eingangswelle 11b des Getriebes 11 ist ein Sensor 15 zugeordnet, mit dem ein auf die Eingangswelle 11a einwirkendes Istmoment Ti gemessen werden kann. Gegebenenfalls kann das Istmoment Ti auch auf andere Weise ermittelt werden.

Es ist eine Regelung 16 vorgesehen, insbesondere ein Zwei-oder Mehrmassen-Regelgerät, dem die Drehzahlen n1, n2 sowie das Istmoment Ti zugeführt sind. Diese Regelung 16 beeinflusst die Ansteuerelektronik 14 und damit die Drehzahl der elektrischen Maschine 12. Die Regelung 16 ist ein Bestandteil eines Regelkreises, mit dem die Maschine 12 derart gesteuert bzw. geregelt wird, dass das auf die Eingangswelle 11 des Getriebes 11 einwirkende Istmoment Ti einem erwünschten, in nicht näher dargestellter Weise vorgegebenem Sollmoment Ts nachfolgt. Es versteht sich, dass auch andere Ausgestaltungen dieses Regelkreises und damit der Regelung 16 möglich sind.

Aufgrund eines Spiels des Getriebes 11 können bei Wechselbelastungen sogenannte Losezustände des Getriebes 11 auftreten. Während eines derartigen Losezustands verdrehen sich die Eingangswelle 11a und die Ausgangswelle 11b des Getriebes 11 um einen Verdrehwinkel w zueinander. Dieser aktuelle Verdrehwinkel w ist zu Beginn eines Losezustands gleich Null und wächst während des Durchlaufs durch den Losezustand auf einen maximalen Verdrehwinkel wmax an.

Ein Losezustand tritt beispielsweise dann auf, wenn die Maschine 12 von dem motorischen in den generatorischen Betrieb übergeht. In diesem Fall endet der Kraftschluss von der Eingangswelle 11a zu der Ausgangswelle 11b des Getriebes zeitlich etwa mit der Beendigung des motorischen Betriebs, sofern gegebenenfalls vorhandene elastische Verwindungen, beispielsweise durch Kupplungen, vernachlässigt werden. Während des nachfolgenden Losezustands verdrehen sich die Eingangswelle 11a und die Ausgangswelle 11b aufgrund des Spiels des Getriebes 11 um den Verdrehwinkel w bis hin zu dem maximalen Verdrehwinkel wmax. Wenn der Kraftschluss zwischen der Eingangswelle 11a und der Ausgangswelle 11b wieder vorhanden ist, ist der Losezustand beendet und der generatorische Betrieb der Maschine 12 beginnt.

Derjenige Zeitraum, in dem sich das Getriebe 11 in dem erläuterten Losezustand befindet, wird nachfolgend als Loseintervall bezeichnet.

Bei einem bestimmten Getriebe oder Getriebetyp stellt der maximale Verdrehwinkel wmax einen bestimmten festen Wert dar. Dies ergibt sich daraus, dass das Spiel eines Getriebes herstellungsbedingt fest vorgegeben ist und sich über der Zeit höchstens durch Verschleißerscheinungen geringfügig ändert. Der maximale Verdrehwinkel wmax eines bestimmten Getriebes kann somit einmalig ermittelt werden, beispielsweise durch eine Messung, bei der die Eingangswelle und die Ausgangswelle des Getriebes manuell zueinander verdreht werden.

Es wird nachfolgend davon ausgegangen, dass der maximale Verdrehwinkel wmax des Getriebes 11 der Figur 1 durch eine vorhergehende Messung ermittelt worden ist und daher bekannt ist.

Zur Ermittlung des aktuellen Verdrehwinkels w während des Durchlaufs durch einen Losezustand des Getriebes 11 sind die beiden Drehzahlen n1, n2 einem Vergleich 18 zugeführt, der eine Drehzahldifferenz nd ermittelt. Die Drehzahldifferenz nd ist einem Integrator 19 zugeführt, der ausgangsseitig dann den Verdrehwinkel w zur Verfügung stellt.

Der aktuelle Verdrehwinkel w ist einer Auswertung 21 zugeführt, der weiterhin der vorab ermittelte, maximale Verdrehwinkel wmax bekannt ist. Wie aus dem in der Figur 1 innerhalb der Auswertung 21 schematisch dargestellten Diagramm zu entnehmen ist, ist dieser maximale Verdrehwinkel wmax in zwei Winkelbereiche aufgeteilt. Die Auswertung 21 stellt nunmehr fortlaufend fest, in welchem der beiden Winkelbereiche sich der aktuelle Verdrehwinkel w befindet. Befindet sich der aktuelle Verdrehwinkel w in einem in dem Diagramm links dargestellten Winkelbereich, so erzeugt die Auswertung 21 ein binäres Signal L1, befindet sich der Verdrehwinkel w jedoch in einem in dem Diagramm rechts dargestellten Winkelbereich, so erzeugt die Auswertung 21 ein binäres Signal L2. Ist der Verdrehwinkel gleich Null, so erzeugt die Auswertung keines der beiden Signale. Die beiden binären Signale L1, L2 werden von der Auswertung 21 an die Regelung 16 weitergegeben.

Solange die Drehzahldifferenz nd im Wesentlichen gleich Null und damit auch der aktuelle Verdrehwinkel w gleich Null ist, ist ein Kraftschluss zwischen der Maschine 12 und dem Getriebe 11 vorhanden. Der Losezustand liegt damit noch nicht vor. In dem schematischen Diagramm, das innerhalb der Auswertung 21 gezeigt ist, ist dieser Zustand ganz links vorhanden, also vor demjenigen Winkelbereich, dem das Signal L1 zugeordnet ist. Ist die Drehzahldifferenz nd und damit auch der aktuelle Verdrehwinkel w hingegen ungleich Null, so ist kein Kraftschluss mehr vorhanden und der Losezustand des Getriebes 11 liegt vor. Dieser Zustand beginnt in dem vorgenannten Diagramm genau dann, wenn von der Auswertung 21 das Signal L1 beispielsweise als binäre "Eins" erzeugt wird. Wenn danach der aktuelle Verdrehwinkel w weiter anwächst, so ist weiterhin kein Kraftschluss zwischen der Maschine 12 und dem Getriebe 11 vorhanden. Irgendwann erkennt die Auswertung 21, dass der aktuelle Verdrehwinkel w sich innerhalb des zweiten Winkelbereichs befindet, so dass die Auswertung das Signal L2 als binäre "Eins" erzeugt. Wird danach die Drehzahldifferenz nd wieder zu Null, so ist der Losezustand beendet und der Kraftschluss zwischen der Maschine 12 und dem Getriebe 11 ist wieder vorhanden. Die Auswertung 21 erzeugt in diesem Fall keines der beiden Signal L1, L2.

Der Losezustand bzw. das Loseintervall des Getriebes 11 wird von der Auswertung 21 somit durch die beiden binären Signale L1, L2 gekennzeichnet, wobei das Signal L1 den ersten Winkelbereich des Losezustands festlegt, während das Signal L2 den zweiten Winkelbereich des Losezustands festlegt. Der erste und der zweite Winkelbereich bilden zusammen das Loseintervall.

Die Aufteilung des bekannten, maximalen Verdrehwinkels wmax in die beiden Winkelbereiche kann beliebig vorgenommen werden. In der Figur 1 ist beispielhaft eine etwa hälftige Aufteilung dargestellt. Die Aufteilung kann aber auch derart erfolgen, dass der erste Winkelbereich wesentlich größer ist als der zweite Winkelbereich. Beispielsweise kann das Verhältnis des ersten zu dem zweiten Winkelbereich etwa 2:1 sein. Es versteht sich, dass auch andere Aufteilungen möglich sind. Die Aufteilung wird dabei vorab festgelegt oder kann in Abhängigkeit von der Drehzahldifferenz nd oder anderen Betriebsgrößen des Getriebes 11 und/oder der Maschine 12 vorgenommen werden.

In dem durch das Signal L1 festgelegten ersten Winkelbereich beeinflusst die Regelung 16 die Maschine 12 derart, dass sich die Drehzahldifferenz nd möglichst schnell vergrößert. Dies ist gleichbedeutend damit, dass in dem ersten Winkelbereich der Verdrehwinkel w möglichst schnell anwächst und der erste Winkelbereich somit möglichst schnell durchlaufen wird. In dem ersten Winkelbereich agiert die Regelung 16 also derart, dass nur eine schwache Dämpfung der Drehzahldifferenz nd vorhanden ist.

In dem durch das Signal L2 festgelegten zweiten Winkelbereich beeinflusst die Regelung die Maschine 12 derart, dass eine starke Dämpfung des auf die Eingangswelle 11b einwirkenden Istmoments Ti erreicht wird. Diese große Dämpfung ist gleichbedeutend damit, dass die Drehzahldifferenz nd möglichst schnell vermindert und damit ein stoßartiger Übergang am Ende des Losezustands vermieden wird.

Durch die in den beiden Winkelbereichen unterschiedlich gewählten Dämpfungen wird somit erreicht, dass am Anfang des Loseintervalls durch die schwache Dämpfung dafür gesorgt wird, dass der Losezustand möglichst schnell durchlaufen wird, während gegen Ende des Loseintervalls durch die starke Dämpfung dafür gesorgt wird, dass keine Stöße bzw. Überschwinger des Drehmoments entstehen.

Die Regelung 16, der Integrator 19, die Auswertung 21 sowie die übrigen Komponenten des vorstehend erläuterten Verfahrens können beispielsweise mit Hilfe eines elektronischen Rechengeräts in der Form eines Computerprogramms realisiert und auf einem elektronischen Speichermedium abgespeichert sein.

In den Figuren 2a, 2b, 2c sind die vorstehend erläuterten Betriebsgrößen des Getriebes 11 und der Maschine 12 jeweils über der Zeit t dargestellt. So sind in der Figur 2a die Drehzahl n1 der Eingangswelle 11a und die Drehzahl n2 der Ausgangswelle 11b des Getriebes 11 dargestellt, in der Figur 2b sind das auf die Eingangswelle 11b einwirkende Istmoment Ti und das zugehörige Sollmoment Ts dargestellt, und in der Figur 2c sind die binären Signale L1, L2 für die beiden Winkelbereiche des Loseintervalls dargestellt.

Aus einer Zusammenschau der Figuren 2a, 2c ist ersichtlich, dass im ersten Winkelbereich des Loseintervalls sich die Drehzahlen n1, n2 auseinander bewegen und damit die Drehzahldifferenz nd schnell größer wird, während dies im zweiten Winkelbereich des Losezustands genau umgekehrt ist. Dies entspricht dem erläuterten möglichst schnellen Durchlaufen des Losezustands am Anfang und dem Abbremsen zur Stoßvermeidung am Ende des Losezustands.

Aus der Figur 2b ist ersichtlich, dass das Istmoment Ti im Wesentlichen dem Sollmoment Ts nachfolgt. Nur innerhalb des Loseintervalls weicht das Istmoment Ti etwas weitgehender von dem Verlauf des Sollmoments Ts ab, ohne jedoch wesentliche Überschwinger oder dergleichen aufzuweisen.

Ergänzend ist in der Figur 2b ein sogenanntes inneres Moment T* eingezeichnet, das in der Figur 1 gestrichelt gekennzeichnet ist, und das das von der Maschine 12 erzeugte Drehmoment darstellt. Das innere Moment T* weist während des ersten Winkelbereichs einen ersten Sprung und während des zweiten Winkelbereichs einen entgegengesetzten zweiten Sprung auf. Durch diese sprungförmigen Änderungen werden letztlich diejenigen Drehmomentüberschwinger am Anfang und am Ende des Loseintervalls kompensiert, die ohne die vorstehend erläuterte Auswertung 21 an sich entstehen würden.

Die vorstehend erläuterten Figuren 2a, 2b, 2c stellen nur Beispiele für mögliche zeitliche Verläufe der Betriebsgrößen des Getriebes 11 und der Maschine 12 dar, die nur zum Zwecke eines besseren Verständnisses erläutert worden sind. Es versteht sich, dass die vorliegende Erfindung nicht auf diese zeitlichen Verläufe beschränkt ist. Entsprechendes gilt für die Beschreibung des Verfahrens der Figur 1. Auch insoweit ist die vorliegende Erfindung nicht auf das beschriebene Ausführungsbeispiel der Figur 1 beschränkt.

## Patentansprüche

1. Verfahren zum Betreiben einer mit einem Getriebe (11) gekoppelten elektrischen Maschine (12), wobei die Maschine (12) zum motorischen und generatorischen Betrieb vorgesehen ist, **dadurch gekennzeichnet, dass** in Abhängigkeit von der Drehzahl (n1) der Eingangswelle (11a) und der Drehzahl (n2) der Ausgangswelle (11b) des Getriebes (11) ein Losezustand des Getriebes (11) ermittelt wird, in dem im Wesentlichen kein Kraftschluss zwischen der Eingangswelle (11a) und der Ausgangswelle (11b) vorhanden ist, dass aus der Drehzahl (n1) der Eingangswelle (11a) und der Drehzahl (n2) der Ausgangswelle (11b) des Getriebes (11) eine Drehzahldifferenz (nd) gebildet wird, und dass der Losezustand in zwei Winkelbereiche aufgeteilt wird, in denen die elektrische Maschine (12) dahingehend unterschiedlich beeinflusst wird, dass die Drehzahldifferenz (nd) in einem der beiden Winkelbereiche sich möglichst schnell vergrößert und in dem anderen Winkelbereich sich möglichst schnell vermindert.

2. Verfahren nach Anspruch 1, wobei die elektrische Maschine (12) derart beeinflusst wird, dass die Drehzahldifferenz (nd) in einem ersten Winkelbereich am Anfang des Losezustands schwach gedämpft wird.

3. Verfahren nach Anspruch 2, wobei die elektrische Maschine (12) derart beeinflusst wird, dass die Drehzahldifferenz (nd) in einem zweiten Winkelbereich nach dem ersten Winkelbereich stark gedämpft wird.

4. Verfahren nach einem der vorstehenden Ansprüche, wobei die Drehzahldifferenz (nd) integriert wird.

5. Verfahren nach Anspruch 4, wobei die integrierte Drehzahldifferenz (nd) einen aktuellen Verdrehwinkel (w) darstellt, und wobei ermittelt wird, ob sich der aktuelle Verdrehwinkel (w) im ersten oder im zweiten Winkelbereich befindet.

6. Verfahren nach einem der vorstehenden Ansprüche, wobei ein auf die Eingangswelle (11a) des Getriebes (11) einwirkendes Istmoment (Ti) auf ein Sollmoment (Ts) geregelt wird.

7. Vorrichtung zum Betreiben einer mit einem Getriebe (11) gekoppelten elektrischen Maschine (12), wobei die elektrische Maschine (12) zum motorischen und generatorischen Betrieb vorgesehen ist, mit einem elektronischen Rechengerät, das zur Ausführung des Verfahrens nach einem der Ansprüche 1 bis 6 hergerichtet ist.

8. Vorrichtung nach Anspruch 7, wobei dem Rechengerät ein elektronisches Speichermedium zugeordnet ist, auf dem ein Computerprogramm abgespeichert ist, das zur Ausführung des Verfahrens nach einem der Ansprüche 1 bis 6 programmiert ist.

## Claims

1. Method for operating an electric machine (12) coupled with a gear mechanism (11), wherein the machine (12) is designed to be operated as a motor and as a generator, **characterised in that**, depending on the rotational speed (n1) of the input shaft (11a) and the rotational speed (n2) of the output shaft (11b) of the gear mechanism (11), a disengaged condition of the gear mechanism (11) is determined in which, substantially, there is no force-locking connection between the input shaft (11a) and the output shaft (11b), that a difference in rotational speed (nd) is formed from the rotational speed (n1) of the input shaft (11a) and the rotational speed (n2) of the output shaft (11b) of the gear mechanism (11), and that the disengaged condition is divided into two angular ranges in which the electric machine (12) is influenced in different ways such that the difference in rotational speed (nd) is increased as quickly as possible in one of the two angular ranges and is reduced as quickly as possible in the other angular range.

2. Method according to claim 1, wherein the electric machine (12) is influenced in such a way that the difference in rotational speed (nd) is gently attenuated in a first angular range at the beginning of the disengaged condition.

3. Method according to claim 2, wherein the electric machine (12) is influenced in such a way that the difference in rotational speed (nd) is strongly attenuated in a second angular range following the first angular range.

4. Method according to one of the preceding claims, wherein the difference in rotational speed (nd) is integrated.

5. Method according to claim 4, wherein the integrated difference in rotational speed (nd) represents a current angle of rotation (w), and wherein it is determined whether the current angle of rotation (w) lies within the first or the second angular range.

6. Method according to one of the preceding claims, wherein an actual torque (Ti) acting on the input shaft (11a) of the gear mechanism (11) is adjusted to a setpoint torque (Ts).

7. Apparatus for operating an electric machine (12) coupled with a gear mechanism (11), wherein the electric machine (12) is designed to be operated as a motor and as a generator, with an electronic computer which is set up to perform the method according to one of the claims 1 to 6.

8. Apparatus according to claim 7, wherein the computer is assigned an electronic storage medium on which a computer program is stored which is programmed to perform the method according to one of the claims 1 to 6.

## Revendications

1. Procédé d'exploitation d'une machine électrique (12) couplée à un engrenage (11), la machine (12) étant prévue pour un fonctionnement moteur et générateur, **caractérisé en ce qu'**un état de jeu de l'engrenage (11) dans lequel il n'y a essentiellement aucune friction entre l'arbre d'entrée (11a) et l'arbre de sortie (11b) est déterminé en fonction de la vitesse de rotation (n1) de l'arbre d'entrée (11a) et de la vitesse de rotation (n2) de l'arbre de sortie (11b) de l'engrenage (11), une différence de vitesse de rotation (nd) est constituée à partir de la vitesse de rotation (n1) de l'arbre d'entrée (11a) et de la vitesse de rotation (n2) de l'arbre de sortie (11b) de l'engrenage (11), et l'état de jeu est divisé en deux plages angulaires dans lesquels la machine électrique (12) est influencée de manière différente **en ce que** la différence de vitesse de rotation (nd) augmente le plus vite possible dans une des deux plages angulaires et diminue le plus vite possible dans l'autre secteur angulaire.

2. Procédé selon la revendication 1, dans lequel la machine électrique (12) est influencée de sorte que la différence de vitesse de rotation (nd) dans une première plage angulaire est faiblement amortie au début de l'état de jeu.

3. Procédé selon la revendication 2, dans lequel la machine électrique (12) est influencée de sorte que la différence de vitesse de rotation (nd) dans une seconde plage angulaire est fortement amortie après la première plage angulaire.

4. Procédé selon l'une quelconque des revendications précédentes, dans lequel la différence de vitesse de rotation (nd) est intégrée.

5. Procédé selon la revendication 4, dans lequel la différence de vitesse de rotation (nd) intégrée représente un angle de torsion (w) actuel, et dans lequel on détermine si l'angle de torsion (w) actuel se trouve dans la première ou dans la seconde plage angulaire.

6. Procédé selon l'une quelconque des revendications précédentes, dans lequel un moment effectif (Ti) agissant sur l'arbre d'entrée (11a) de l'engrenage (11) est réglé sur un moment théorique (Ts).

7. Dispositif d'exploitation d'une machine électrique (12) couplée à un engrenage (11), dans lequel la machine électrique (12) est prévue pour un fonctionnement moteur et générateur, avec un appareil de calcul électronique, qui est préparé pour mettre en oeuvre le procédé selon l'une quelconque des revendications 1 à 6.

8. Dispositif selon la revendication 7, dans lequel un moyen de mémorisation électronique sur lequel est mémorisé un programme informatique qui est programmé pour une mise en oeuvre du procédé selon l'une quelconque des revendications 1 à 6 est associé à l'appareil de calcul.
